# FASCICULE DE BREVET EUROPEEN

(11) **EP 2 944 892 B1**
(45) Date de publication et mention de la délivrance du brevet: **12.08.2020**
(21) Numéro de dépôt: 15305711.2
(22) Date de dépôt: 11.05.2015
(51) Int. Cl.: F24F 12/00, F24F 11/00

(54) **CAISSON DE VENTILATION DOUBLE-FLUX**
DOPPELFLUSS-BELÜFTUNGSSCHACHT
DUAL-FLOW VENTILATION BOX

(30) Priorité: 13.05.2014 FR 1454257
(43) Date de publication de la demande: 18.11.2015
(73) Titulaire: Soler & Palau Research, S.L., 08150 Parets del Vallés (Barcelona) (ES)
(72) Inventeur: Bordas, Ivan, 79401 SAINT MAIXENT L'ECOLE CEDEX (FR); Gamissans, Marius, 08150 PARETS DEL VALLES (ES)
(74) Mandataire: Thinat, Michel

(56) Documents cités:
- EP-A1- 2 116 786
- EP-A1- 2 333 446
- EP-A2- 0 044 560
- EP-A2- 1 632 730
- GB-A- 2 242 515

## Description

La présente invention porte sur un dispositif adapté pour assurer, dans un caisson de ventilation double-flux, l'évacuation de fumées chaudes, ainsi qu'un caisson équipé d'un tel dispositif.

L'extraction de fumées et de chaleur est communément réalisée avec des ventilateurs simples flux équipés de dispositifs plus ou moins élaborés permettant le fonctionnement du ventilateur avec des gaz chauds, par exemple 400°C. (Exemple : moteur en dehors du flux d'air, moteur haute température, canal d'air permettant le refroidissement du moteur...).

Les caissons de ventilation double-flux sont de plus en plus utilisés pour la ventilation des bâtiments afin de répondre à la fois à une exigence de qualité d'air dans les locaux et à satisfaire les exigences de la réglementation thermique actuelle et de prévoir ses évolutions à venir. C'est aussi pourquoi de plus en plus de caissons de ventilation double-flux sont utilisés pour un usage de Ventilation Mécanique Contrôlée (VMC). Ces caissons double-flux à usage VMC sont alors soumis à différentes réglementations pour assurer les débits minima pour l'hygiène, d'une part, et pour être en conformité avec les exigences de la Réglementation de protection incendie, d'autre part.

Un caisson double-flux de VMC est un ensemble monobloc équipé systématiquement d'un moto-ventilateur de soufflage, d'un moto-ventilateur d'extraction, d'un échangeur de chaleur et de filtres. Cet ensemble peut intégrer des organes fonctionnels complémentaires tels qu'une batterie de préchauffage et une batterie de rafraichissement.

Afin de pouvoir répondre aux exigences liées à la réglementation de protection incendie (extraction de fumée et de chaleur), le caisson double flux doit permettre au ventilateur d'extraction de fonctionner même lorsqu'il extrait des fumées dont la température est conventionnellement définie (exemple : 120 °C, 200 °C, 300 °C, 400 °C).

De plus, les fumées extraites par le ventilateur d'extraction ne doivent pas être insufflées dans le logement par l'intermédiaire du ventilateur d'insufflation si le caisson présente des fuites internes, sachant que le taux de fuite admis est généralement inférieur à 3% du débit du ventilateur d'extraction.

Enfin, afin d'éviter tout risque de propagation d'un feu, lorsque le ventilateur d'insufflation fonctionne en même temps que le ventilateur d'extraction, la température d'insufflation ne doit pas s'élever exagérément. L'échauffement de l'air ne doit pas dépasser par exemple 180K.

On comprend dès lors que l'extraction de fumées et de chaleur avec ce type d'appareil est complexe compte tenu du nombre de composants sensibles, notamment l'échangeur de chaleur, les joints caoutchouc et les filtres. De plus, il n'est pas aisé d'assurer à la fois un fonctionnement permanent des ventilateurs, une maitrise de fuites internes et le contrôle de l'élévation de température de l'air insufflé.

Le but de l'invention est de proposer une solution qui permette de répondre à la fois aux exigences de confort et aux exigences de sécurité des caissons de ventilation double-flux. Le document EP2333446, qui correspond à l'état de la technique le plus proche, décrit un dispositif adapté pour assurer l'évacuation d'un local de l'air à extraire comprenant une conduite de dérivation du caisson de ventilation double-flux et un clapet hors du caisson permettant, d'obturer la conduite allant à l'échangeur de chaleur. Le ventilateur d'extraction est également situé hors du caisson contenant l'échangeur de chaleur.

Le but de l'invention est atteint avec un dispositif adapté pour assurer, dans un caisson de ventilation double-flux, l'évacuation de fumées chaudes, le caisson comprenant un ventilateur de soufflage, un ventilateur d'extraction et un échangeur de chaleur.

Selon la présente invention, le dispositif comprend un clapet d'orientation adapté pour pouvoir pivoter entre une position d'orientation des fumées vers l'échangeur de chaleur et une position d'orientation des fumées vers une sortie directe vers l'extérieur du caisson.

Selon le mode de réalisation choisi, le dispositif peut également comprendre un moyen d'actionnement du clapet d'orientation réagissant à une élévation anormale de la température des fumées.

Le but de l'invention est également atteint avec un caisson de ventilation à double-flux comprenant un ventilateur de soufflage, un ventilateur d'extraction et un échangeur de chaleur.

Selon la présente invention, le caisson comprend en outre, en amont de l'échangeur de chaleur, une sortie directe vers l'extérieur du caisson et un dispositif de déviation de fumées chaudes vers cette sortie.

Selon le mode de réalisation choisi, le caisson peut également avoir l'une au moins des caractéristiques supplémentaires suivantes :
- le caisson comprend en outre un moyen d'actionnement du dispositif de déviation des fumées réagissant à un changement anormal des conditions de fonctionnement du caisson tel qu'une élévation anormale de la température des fumées ;
- le dispositif de déviation est disposé entre le ventilateur d'extraction et l'échangeur de chaleur;
- l'échangeur de chaleur est pourvu de filtres d'entrée pour chacun des flux .

D'autres caractéristiques et avantages de la présente invention ressortiront de la description ci-après d'un mode de réalisation du caisson de l'invention.

La description est faite en référence aux dessins dont :
- la figure 1 représente un caisson selon l'invention avec un dispositif de déviation de fumées chaudes en position de fonctionnement normal et
- la figure 2 représente le même caisson avec le dispositif de déviation en position de désenfumage.

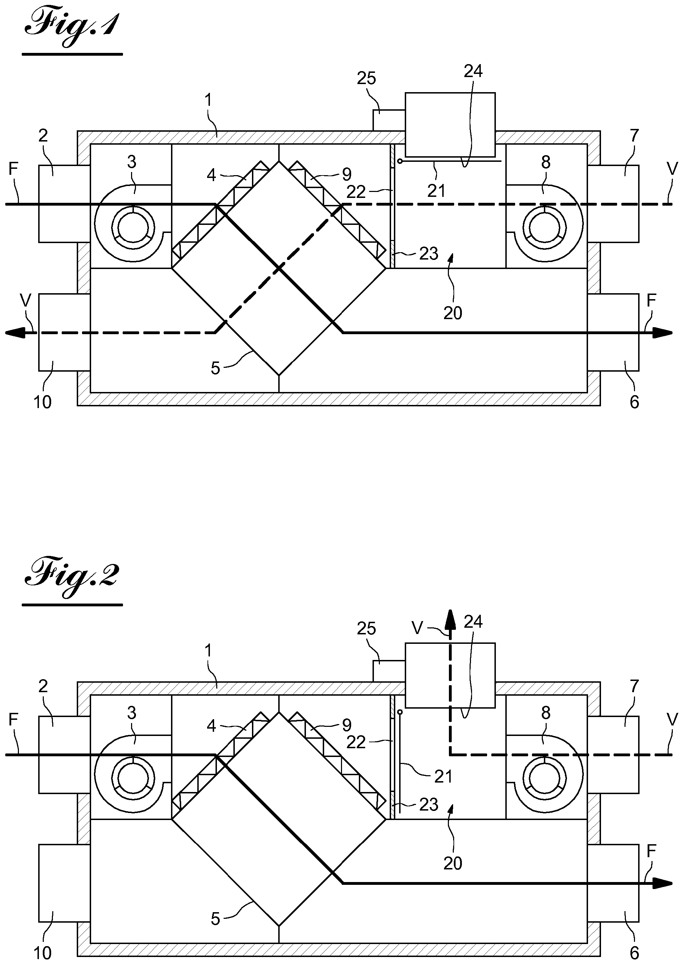

La figure 1 représente schématiquement un caisson de ventilation double-flux 1 avec une première entrée 2 pour de l'air frais, un ventilateur de soufflage 3 aspirant cet air frais par exemple de l'extérieur et faisant le passer comme flux F par un premier filtre d'entrée 4 d'un échangeur de chaleur 5 vers une première sortie 6 du caisson 1 et par exemple dans un local. Le caisson 1 comprend en outre une seconde entrée 7 pour de l'air à extraire, un ventilateur d'extraction 8 aspirant cet air à extraire et faisant le passer comme flux V par un second filtre d'entrée 9 de l'échangeur de chaleur 5 vers une seconde sortie 10 du caisson 1, par exemple vers l'extérieur.

Le caisson 1 comprend en outre un dispositif de déviation 20 disposé entre le ventilateur d'extraction 8 et le second filtre d'entrée 9 de l'échangeur de chaleur 5. Le dispositif de déviation 20 comprend un clapet d'orientation 21 adapté pour pouvoir obturer alternativement une ouverture 22 formée dans une paroi 23 séparant le dispositif de déviation 20 de l'échangeur de chaleur 5 et une troisième sortie 24 du caisson 1 donnant directement vers l'extérieur du caisson 1.

Le dispositif de déviation 20 comprend en outre des moyens d'actionnement 25 qui permettent de faire pivoter le clapet 21, selon les conditionnements de fonctionnement, d'une des deux positions d'obturation et d'orientation indiquées plus haut vers l'autre. Autrement dit, le clapet 21 qui est normalement situé devant la sortie 24 pour laisser passer le flux V par l'échangeur de chaleur 5, est pivoté, en cas de dépassement de limites prédéterminées, par exemple de la température de l'air extrait, devant l'ouverture 22 pour faire sortir l'air extrait directement vers l'extérieur du caisson 1.

La figure 2 montre le caisson de la figure 1 avec le dispositif de déviation 20 dans une telle position de désenfumage. Dans cette position, le flux d'air V extrait par le ventilateur d'extraction 8 est dévié directement en dehors du caisson 1 en le faisant passer par la sortie 24.

Les moyens d'actionnement 25 sont avantageusement reliés à un capteur de température disposé par exemple à la sortie du ventilateur d'extraction 8 ou à un détecteur de fumée. Selon une solution alternative, les moyens d'actionnement 25 peuvent être reliés en parallèle à une commande manuelle telle un contacteur de commande ou même montés parallèlement à une commande manuelle du clapet de déviation 21.

Il est à noter que le clapet 21 est maintenu en position ouverte à l'aide d'un matériau thermofusible (environ 70°C). Lorsque les gaz chauds circulent, le thermofusible cède et un ressort permet de forcer la fermeture du clapet, le cas échéant afin de s'assurer de la bonne fermeture de celui-ci et également lutter contre les forces aérodynamiques qui ont pour effet d'empêcher le clapet de se fermer.

Le clapet est conçu en matériau permettant de résister sans déformation à une température élevée de par exemple 400°C.

La conception selon la présente invention d'un caisson de ventilation double-flux présente de nombreux avantages, par exemple :
- d'une manière générale concernant sa conception, et relatif au fonctionnement normal :
   = le caisson présente une construction simple et similaire à une VMC double flux standard ;
   = le dispositif de déviation permettant de répondre aux exigences liées à l'extraction de fumées et de chaleur n'a pas d'impact sur la performance du caisson ;
- le ventilateur 2 est conçu de façon que le moteur du ventilateur soit en dehors du flux d'ai dans une zone ventilée afin d'assurer son fonctionnement en mode confort et en mode désenfumage ;
- en fonctionnement de désenfumage, l'évacuation directe des fumées et de la chaleur vers l'extérieur permet
   = de limiter grandement les risques de détérioration des éléments constituants le caisson de ventilation double-flux liés à la présence de gaz à haute température, notamment des filtres et des joints ;
   = de supprimer les risques de fuite de fumées vers l'air insufflé ; et
   = de ne pas faire passer l'air chaud au travers de l'échangeur de chaleur et donc de ne pas insuffler de l'air chaud dans le circuit d'air frais.

## Revendications

1. Dispositif adapté pour assurer l'évacuation d'un local de l'air à extraire, qui comprend un caisson de ventilation double-flux (1) **caractérisé en ce que** le caisson comporte un ventilateur de soufflage (3) destiné à aspirer de l'air frais, un ventilateur d'extraction (8) destiné à aspirer de l'air à extraire, un échangeur de chaleur (5) pourvu d'une entrée d'air à extraire et d'une sortie Z (24) d'air à extraire et un clapet d'orientation (21) adapté pour pouvoir pivoter entre une position d'orientation permettant le passage de l'air à extraire aspiré vers l'échangeur de chaleur (5) et une position d'obturation du passage vers l'entrée d'air à extraire de l'échangeur de chaleur (5) et de sortie de l'air vers l'extérieur, **en ce que** le ventilateur d'extraction (8) est disposé entre l'ouverture d'extraction (7) dudit caisson et l'échangeur de chaleur (5), que la sortie (24) vers l'extérieur est une sortie directe vers l'extérieur, séparée de l'échangeur de chaleur (5) et est disposée entre le ventilateur d'extraction (8) et l'échangeur de chaleur, que le clapet d'orientation (21) est disposé entre le ventilateur d'extraction (8) et l'échangeur de chaleur (5) et **en ce que**, dans le cas d'un incendie, le clapet d'orientation est dans sa position d'obturation du passage vers l'entrée d'air à extraire de l'échangeur, pour assurer l'évacuation des fumées chaudes à travers la sortie (24) directement vers l'extérieur, sans qu'elles viennent en contact avec l'échangeur de chaleur (5).

2. Dispositif selon la revendication 1, **caractérisé en ce qu'**il comprend un moyen d'actionnement (25) du clapet d'orientation (21), adapté pour réagir à un changement anormal des conditions de fonctionnement du caisson, tel qu'une élévation anormale de la température des fumées, et pour faire pivoter le clapet d'orientation (21) dans sa position d'obturation vers l'échangeur de chaleur (5) et de sortie directe (24) vers l'extérieur.

3. Dispositif selon l'une des revendications 1 ou 2, **caractérisé en ce que** l'échangeur de chaleur (5) est pourvu d'un filtre d'entrée (4,9) pour chacun des flux.

4. Caisson selon la revendication 3, **caractérisé en ce qu'**il comprend en outre un moyen d'actionnement (25) du dispositif de déviation (20) des fumées réagissant à un changement anormal des conditions de fonctionnement du caisson (1) tel qu'une élévation anormale de la température des fumées.

5. Caisson selon la revendication 3 ou 4, **caractérisé en ce que** le dispositif de déviation (20) est disposé entre le ventilateur d'extraction (8) et l'échangeur de chaleur (5).

6. Caisson selon l'une quelconque des revendications 3 à 5, **caractérisé en ce que** l'échangeur de chaleur (5) est pourvu de filtres d'entrée (4, 9) pour chacun des flux.

## Patentansprüche

1. Vorrichtung, die zur Gewährleistung der Ableitung von aus einem Raum zu extrahierender Luft geeignet ist, die ein Doppelstrom-Lüftergehäuse (1) umfasst, **dadurch gekennzeichnet, dass** das Gehäuse einen Blaslüfter (3) aufweist, der zum Ansaugen von Frischluft bestimmt ist, einen Extraktionslüfter (8), der zum Ansaugen der zu extrahierenden Luft bestimmt ist, einen Wärmetauscher (5), der mit einem Einlass zu extrahierender Luft und einem Auslass (24) zu extrahierender Luft ausgestattet ist und ein Richtungsventil (21), das geeignet ist, um zwischen einer Richtungsposition, die den Durchgang von angesaugter zu extrahierender Luft zum Wärmetauscher (5) gestattet, und einer Verschlussposition des Durchgangs zum Einlass zu extrahierender Luft des Wärmetauscher (5) und Auslass der Luft nach außen schwenken zu können, dadurch, dass der Extraktionslüfter (8) zwischen der Extraktionsöffnung (7) des Kastens und dem Wärmetauscher (5) angeordnet ist, dass der Auslass (24) nach außen ein direkter Auslass nach außen ist, getrennt vom Wärmetauscher (5) und zwischen dem Extraktionslüfter (8) und dem Wärmetauscher angeordnet ist, dass das Richtungsventil (21) zwischen dem Extraktionslüfter (8) und dem Wärmetauscher (5) angeordnet ist und dass, im Fall eines Brandes, das Richtungsventil in seiner Verschlussposition des Durchgangs zum Einlass von zu extrahierender Luft des Tauschers ist, um die Ableitung der warmen Rauchgase durch den Auslass (24) direkt nach außen zu gewährleisten, ohne dass sie mit dem Wärmetauscher (5) in Kontakt kommen.

2. Vorrichtung nach Anspruch 1, **dadurch gekennzeichnet, dass** sie ein Betätigungsmittel (25) des Richtungsventils (21) umfasst, das geeignet ist, um auf eine anormale Veränderung der Funktionsbedingungen des Gehäuses wie eine anormale Erhöhung der Temperatur der Rauchgase zu reagieren und um das Richtungsventil (21) zu veranlassen, in seine Verschlussposition zum Wärmetauscher (5) und direkten Auslass (24) nach außen zu schwenken.

3. Vorrichtung nach einem der Ansprüche 1 oder 2, **dadurch gekennzeichnet, dass** der Wärmetauscher (5) mit einem Einlassfilter (4, 9) für jeden der Ströme ausgestattet ist.

4. Gehäuse nach Anspruch 3, **dadurch gekennzeichnet, dass** es ferner ein Betätigungsmittel (25) der Umleitungsvorrichtung (20) der Rauchgase umfasst, das auf eine anormale Veränderung der Funktionsbedingungen des Gehäuses (1) wie eine anormale Erhöhung der Temperatur der Rauchgase reagiert.

5. Gehäuse nach Anspruch 3 oder 4, **dadurch gekennzeichnet, dass** die Umleitungsvorrichtung (20) zwischen dem Extraktionslüfter (8) und dem Wärmetauscher (5) angeordnet ist.

6. Gehäuse nach einem der Ansprüche 3 bis 5, **dadurch gekennzeichnet, dass** der Wärmetauscher (5) mit Einlassfiltern (4, 9) für jeden der Ströme ausgestattet ist.

## Claims

1. A device suitable for ensuring the discharge from a room of air to be extracted, which comprises a dual-flow ventilation box (1), **characterized in that** the box includes a blower fan (3) designed to suction fresh air, an extraction fan (8) designed to suction air to be extracted, a heat exchanger (5) provided with an inlet for air to be extracted and an outlet (24) for air to be extracted and an orientation valve (21) suitable for pivoting between an orientation position allowing the passage of the suctioned air to be extracted toward the heat exchanger (5) and a closed position of the passage toward the inlet for air to be extracted of the heat exchanger (5) and the outlet for air to the outside, **in that** the extraction fan (8) is arranged between the extraction opening (7) of said box and the heat exchanger (5), such that the outlet (24) to the outside is a direct outlet to the outside, separate from the heat exchanger (5), and is arranged between the extraction fan (8) and the heat exchanger, the orientation valve (21) is arranged between the extraction fan (8) and the heat exchanger (5), and **in that**, in case of fire, the orientation valve is in its closed position of the passage toward the inlet for air to be extracted from the exchanger, to ensure the discharge of the hot fumes through the outlet (24) directly to the outside, without them coming into contact with the heat exchanger (5).

2. The device according to claim 1, **characterized in that** it comprises an actuating means (25) of the orientation valve (21), suitable for reacting to an abnormal change in the operating conditions of the box, such as an abnormal increase in the temperature of the fumes, and for pivoting the orientation valve (21) into its closed position toward the heat exchanger (5) and direct outlet (24) to the outside.

3. The device according to one of claims 1 or 2, **characterized in that** the heat exchanger (5) is provided with an inlet filter (4, 9) for each of the flows.

4. The box according to claim 3, **characterized in that** it further comprises an actuating means (25) of the bypass device (20) of the fumes reacting to an abnormal change in the operating conditions of the box (1), such as an abnormal increase in the temperature of the fumes.

5. The box according to claim 3 or 4, **characterized in that** the bypass device (20) is arranged between the extraction fan (8) and the heat exchanger (5).

6. The box according to any one of claims 3 to 5, **characterized in that** the heat exchanger (5) is provided with input filters (4, 9) for each of the flows.
